# EUROPEAN PATENT SPECIFICATION

(11) **EP 3 562 195 B1**
(45) Date of publication and mention of the grant of the patent: **14.07.2021**
(21) Application number: 19168320.0
(22) Date of filing: 10.04.2019
(51) Int. Cl.: H04W 24/02, H04L 12/46, H04W 88/04, H04W 88/08, H04W 84/12, H04W 88/06

(54) **WIRELESS COMMUNICATION EQUIPMENT AND METHOD FOR SETTING OPERATION MODE THEREOF**
DRAHTLOSKOMMUNIKATIONSVORRICHTUNG UND VERFAHREN ZUM EINSTELLEN DER BETRIEBSART DAVON
ÉQUIPEMENT DE COMMUNICATION SANS FIL ET SON PROCÉDÉ DE RÉGLAGE DE MODE DE FONCTIONNEMENT

(30) Priority: 24.04.2018 KR 20180047487
(43) Date of publication of application: 30.10.2019
(73) Proprietor: Humax Networks, Inc., Bundang-gu, Seonnam-si, Gyeonggi-do 13595 (KR)
(72) Inventor: KIM, Hee Jung, 05048 Seoul (KR); CHO, Nam Kyu, 16944 Yongin-si, Gyeonggi-do (KR)
(74) Representative: M. Zardi & Co S.A.

(56) References cited:
- US-A1- 2005 246 431
- US-A1- 2012 134 308
- Humax: "QUANTUM T3A - AC 1200 Dual Band Smart Wi-Fi Router - Operation Modes", , 4 July 2017 (2017-07-04), pages 1-13, XP055611663, Retrieved from the Internet: URL:https://web.archive.org/web/2017070420 2713/https://quantum.humaxdigital.com/prod uct/quantum-t3a/ [retrieved on 2019-08-08]
- Edimax: "N300 Multi-Function Wi-Fi Router Three Essential Networking Tools in One", , 23 September 2013 (2013-09-23), pages 1-4, XP055611378, Retrieved from the Internet: URL:https://www.edimax.com/edimax/mw/cufil es/files/download/datasheet/transfer/Wirel ess/BR-6428nC/BR-6428nC_Datasheet_2013Sep1 1.pdf [retrieved on 2019-08-07]
- Humax: "Quick Start Guide AC1200 Wi-Fi Router Multi-Function T3Av2", , 3 May 2018 (2018-05-03), pages 1-2, XP055611354, Retrieved from the Internet: URL:https://dearhumax.com/file/Q-guide/QG_ T3Av2_100GB_18-0503.pdf [retrieved on 2019-08-07]

## Description

### CROSS-REFERENCE TO RELATED APPLICATION

This application is claims the benefit of priority to Korean Patent Application No. 10-2018-0047487, filed in the Korean Intellectual Property Office on April 24, 2018.

### TECHNICAL FIELD

The present disclosure relates to a technology for setting an operation mode of wireless communication equipment.

### BACKGROUND

A wireless network allows a user to access various pieces of content conveniently through user equipment such as a personal computer (PC), a smartphone, and a tablet PC. Various pieces of wireless communication equipment such as a router, an extender (e.g., a repeater, a wireless bridge, an access point (AP), and the like), and the like may be used to establish a wireless network. In recent years, there have been an increasing number of users who utilize pieces of wireless communication equipment to utilize a wireless network without speed delay and a shadow area indoors.

Pieces of wireless communication equipment such as a separate extender, a LAN switch, and the like are also present in the market, but users may utilize a router as an extender, a LAN switch, or the like by changing the operation mode of the router to save cost. However, the conventional router needs to perform a configuration composed of a plurality of steps by using a web user interface (UI), when changing the operation mode. Even though one of the steps is set incorrectly, the change of the operation mode may fail, when changing the operation mode. Furthermore, since users do not know what the wrong configuration is, it may be difficult for users who lack knowledge of the network to change the operation mode.

US 2005 0246431 A1 discloses a method for automatically determining in which data forwarding mode a network device should operate.

"QUANTUM T3A - AC 1200 Dual Band Smart Wi-Fi Router - Operation Modes" discloses regarding operation mode such as 'Repeater' and 'Bridge' modes.

"N300 Multi-Function Wi-Fi Router Three Essential Networking Tools in One" discloses a product that is 300Mbps highspeed multi-function Wi-Fi solution which supports IEEE 802.11b/g/n standards.

### SUMMARY

The present disclosure has been made to solve the above-mentioned problems occurring in the prior art while advantages achieved by the prior art are maintained intact. A wireless communication equipment according to the present invention is claimed in claim 1. Moreover, according to the present invention, an operation mode setting method of a wireless communication equipment is claimed in claim 12.

To solve the above-mentioned problems and tasks issued in the present disclosure, embodiments of the present disclosure may make it possible to use a piece of wireless communication equipment in various operation modes without complex setting process of a user, by improving a method of changing the operation mode.

The technical problems to be solved by the present inventive concept are not limited to the aforementioned problems, and any other technical problems not mentioned herein will be clearly understood from the following description by those skilled in the art to which the present disclosure pertains.

According to an aspect of the present disclosure, wireless communication equipment may include a communication interface and a processor electrically connected to the communication interface. The processor may be configured to set an operation mode of the wireless communication equipment to a router mode or an extender mode, based on a selection of a user of the wireless communication equipment, to configure a network connection such that the wireless communication equipment operates in the router mode, when the operation mode is set to the router mode, and to configure the network connection such that the wireless communication equipment operates in one of a plurality of sub modes included in the extender mode based at least partly on a first connection state between the wireless communication equipment and an external device or a second connection state between the wireless communication equipment and user equipment, when the operation mode is set to the extender mode.

According to an embodiment, the wireless communication equipment may further include a switch selecting the operation mode. The processor may be configured to set the operation mode to the router mode or the extender mode based on a state of the switch.

According to an embodiment, the processor may be configured to receive an input of the user for a selection of the operation mode from the user equipment through a user interface provided by the user equipment, and to set the operation mode to the router mode or the extender mode based on the input of the user.

According to an embodiment, the processor may be configured to enable network address translation (NAT) and dynamic host configuration protocol (DHCP) and to change a local domain provided to the user equipment so as to correspond to the router mode, when the operation mode is set to the router mode.

According to an embodiment, the processor may be configured to disable NAT and DHCP; and to change a local domain provided to the user equipment so as to correspond to the extender mode, when the operation mode is set to the extender mode.

According to an embodiment, the plurality of sub modes includes a repeater mode, a wireless bridge mode, and an access point (AP) mode.

According to an embodiment, the processor may be configured to configure the network connection such that the wireless communication equipment operates in the repeater mode, when the wireless communication equipment is connected to the external device and the user equipment wirelessly.

According to an embodiment, the processor may be configured to configure the network connection such that the wireless communication equipment operates in the wireless bridge mode, when the wireless communication equipment is connected to the external device wirelessly and is connected to the user equipment wiredly.

According to an embodiment, the processor may be configured to configure the network connection such that the wireless communication equipment operates in the AP mode, when the wireless communication equipment is connected to the external device wiredly.

According to an embodiment, the processor may be configured to transmit a selection result for at least part of the repeater mode, the wireless bridge mode or the AP mode to the user equipment and to receive a user input for verifying the selection result from the user equipment, when the operation mode is set to the extender mode.

According to an embodiment, the processor may be configured to configure the network connection to an external device, which is selected by the user, from among a plurality of external devices, when the operation mode is set to the extender mode.

According to another aspect of the present disclosure, an operation mode setting method of wireless communication equipment includes setting an operation mode of the wireless communication equipment to a router mode or an extender mode, based on a selection of a user of the wireless communication equipment, configuring a network connection such that the wireless communication equipment operates in the router mode, when the operation mode is set to the router mode, and configuring the network connection such that the wireless communication equipment operates in one of a plurality of sub modes included in the extender mode based at least partly on a first connection state between the wireless communication equipment and an external device or a second connection state between the wireless communication equipment and user equipment, when the operation mode is set to the extender mode.

### BRIEF DESCRIPTION OF THE DRAWINGS

The above and other objects, features and advantages of the present disclosure will be more apparent from the following detailed description taken in conjunction with the accompanying drawings:
FIG. 1 illustrates an operation mode of wireless communication equipment, according to an embodiment;
FIG. 2 illustrates an exemplary operation environment of wireless communication equipment, according to an embodiment;
FIG. 3 is a block diagram illustrating a configuration of wireless communication equipment, according to an embodiment;
FIG. 4 is a flowchart for describing an operation mode setting method of wireless communication equipment, according to an embodiment;
FIG. 5 illustrates an operation of a switch included in wireless communication equipment, according to an embodiment;
FIG. 6 illustrates an exemplary user interface provided to set an operation mode of wireless communication equipment, according to an embodiment;
FIG. 7 illustrates an exemplary user interface provided to set an operation mode of wireless communication equipment, according to an embodiment;
FIG. 8 illustrates an exemplary user interface provided to set an operation mode of wireless communication equipment, according to an embodiment;
FIG. 9 illustrates an exemplary user interface provided to set an operation mode of wireless communication equipment, according to an embodiment; and
FIG. 10 is a flowchart for describing a web UI providing method for setting an operation mode of wireless communication equipment, according to an embodiment.

### DETAILED DESCRIPTION

Hereinafter, various embodiments of the present disclosure will be described with reference to accompanying drawings.

The terms of a singular form may include plural forms unless otherwise specified. In the disclosure disclosed herein, the expressions "A or B", "at least one of A and/or B", "A, B, or C", or "at least one of A, B, and/or C", and the like used herein may include any and all combinations of one or more of the associated listed items. Expressions such as "first," or "second," and the like, may express their components regardless of their priority or importance and may be used to distinguish one component from another component but is not limited to these components. When a (e.g., first) component is referred to as being "(operatively or communicatively) coupled with/to" or "connected to" another (e.g., second) component, it may be directly coupled with/to or connected to the other component or an intervening component (e.g., a third component) may be present. The size and thickness of each of the components illustrated in the drawings are shown for convenience of explanation and the present disclosure is not necessarily limited to the size and thickness of the configuration in which the present disclosure is illustrated.

Hereinafter, wireless communication equipment according to various embodiments will be described with reference to the accompanying drawings.

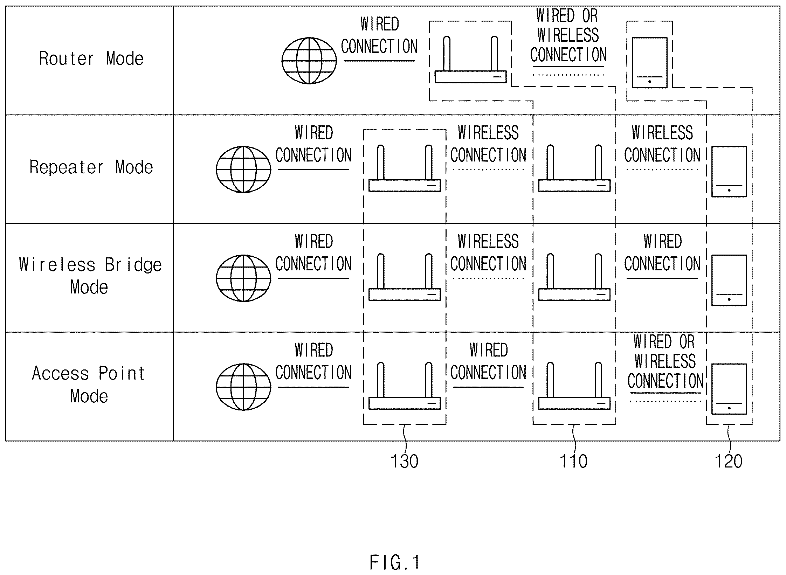

FIG. 1 illustrates an operation mode of wireless communication equipment, according to an embodiment.

Referring to FIG. 1, wireless communication equipment 110 according to an embodiment may operate in various operation modes. For example, the wireless communication equipment 110 may operate in a router mode, a repeater mode, a wireless bridge mode (or a Wi-Fi bridge mode), or an AP mode. The wireless communication equipment 110 may automatically optimize the operation mode based on the user's selection, the connection state with an upper network 130 (e.g., an external device 31), and the connection state with a client 120 (e.g., user equipment 32). In the present disclosure, the connection state may mean a wireless connection or a wired connection.

The wireless communication equipment 110 may operate as a router, when the user selects a router mode. The wireless communication equipment 110 may be connected to Internet wiredly, and may be connected to the client 120 wiredly or wirelessly.

The wireless communication equipment 110 may operate as a repeater, a wireless bridge, or an AP, when the user selects an extender mode. The mode of the wireless communication equipment 110 may be converted to an appropriate mode, based on a first connection state between the upper network 130 and the wireless communication equipment 110 and a second connection state between the client 120 and the wireless communication equipment 110. For example, the wireless communication equipment 110 may operate as the repeater, when each of the first connection state and the second connection state is a wireless connection. For another example, the wireless communication equipment 110 may operate as the wireless bridge, when the first connection state is a wireless connection and the second connection state is a wired connection. For another example, the wireless communication equipment 110 may operate as the AP, when the first connection state is a wired connection and the second connection state is a wired or wireless connection.

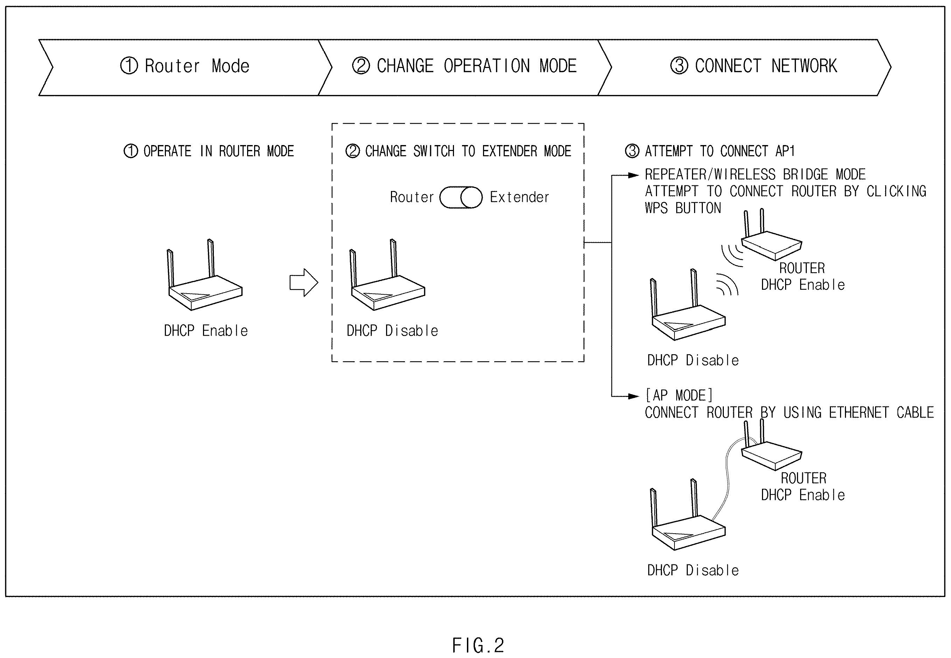

FIG. 2 illustrates an exemplary operation environment of wireless communication equipment, according to an embodiment.

Referring to FIG. 2, wireless communication equipment according to an embodiment may support various operation modes. For example, the wireless communication equipment may operate in a router mode. In the router mode, the wireless communication equipment may enable a dynamic host configuration protocol (DHCP).

A user of the wireless communication equipment may manipulate a switch included in the wireless communication equipment. The operation mode of the wireless communication equipment may be changed from the router mode to an extender mode by the manipulation of the switch. In the extender mode, the wireless communication equipment may disable the DHCP.

In the extender mode, the wireless communication equipment may operate in a repeater mode, a wireless bridge mode, or an AP mode. The wireless communication equipment may operate in the repeater mode or the wireless bridge mode, when the wireless communication equipment is wirelessly connected to an external router. The wireless communication equipment may be connected to the external router, when a Wi-Fi protected setup (WPS) button of the wireless communication equipment and a WPS button of the external router are pressed. The wireless communication equipment may operate in the AP mode, when the wireless communication equipment is connected to the external router wiredly. The wireless communication equipment may be connected to the external router via an Ethernet cable.

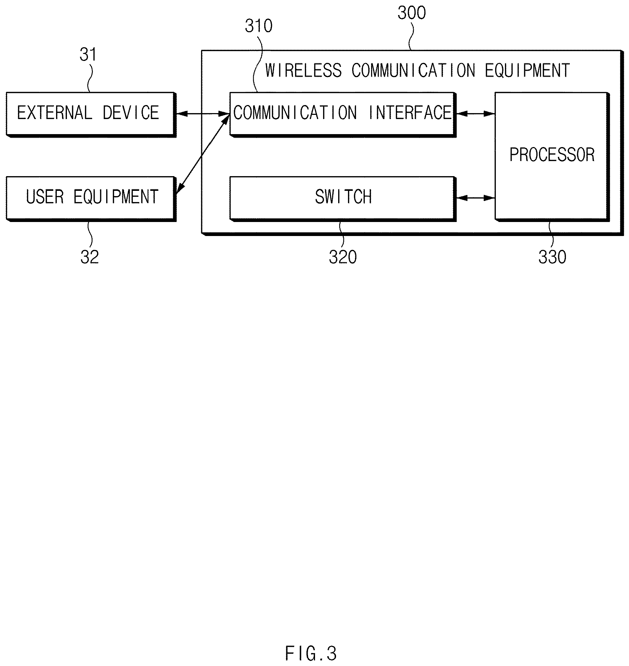

FIG. 3 is a block diagram illustrating a configuration of wireless communication equipment, according to an embodiment.

Referring to FIG. 3, wireless communication equipment 300 according to an embodiment may include a communication interface 310, a switch 320, and a processor 330. For example, the wireless communication equipment 300 may operate as a router or an extender (e.g., a repeater, a wireless bridge, or an AP).

The communication interface 310 may include a wired/wireless interface. The communication interface 310 may be connected to the external device 31 (e.g., a router, an AP, or an external server) and the user equipment 32.

The switch 320 may be configured to select an operation mode. For example, the switch 320 may be configured such that a user selects a router mode or an extender mode. The switch 320 may be omitted depending on implementation of the present disclosure. In this case, the router mode or the extender mode may be selected through a web UI displayed in the user equipment 32.

The processor 330 may be electrically connected to the communication interface 310 and the switch 320. The processor 330 may control the components such as the communication interface 310, the switch 320, and the like and may perform various data processing and calculation.

According to an embodiment, the processor 330 may set the operation mode of the wireless communication equipment 300 to the router mode or the extender mode, based on the selection of the user of the wireless communication equipment 300. The processor 330 may set the operation mode primarily depending on the user's selection. According to an embodiment, the processor 330 may set the operation mode based on the state of the switch 320 manipulated by the user. The processor 330 may set the operation mode based on a user input to the hardware switch 320. According to an embodiment, the processor 330 may receive a user input for selecting the operation mode from the user equipment 32 through a user interface provided by the user equipment 32 and may set the operation mode based on the user input. The processor 330 may set the operation mode based on the user input to a menu in the web UI provided through the user equipment 32.

According to an embodiment, the processor 330 may configure a network connection such that the wireless communication equipment 300 operates in the router mode, when the operation mode is set to the router mode. The processor 330 may enable network address translation (NAT) and dynamic host configuration protocol (DHCP) and may change a local domain provided to the user equipment 32 so as to correspond to the router mode, when the operation mode is set to the router mode. The web page corresponding to the local domain may include the web UI for the router mode.

According to an embodiment, the processor 330 may configure a network connection such that the wireless communication equipment 300 operates in one mode of a plurality of sub modes included in the extender mode based at least partly on a first connection state between the wireless communication equipment 300 and the external router or a second connection state between the wireless communication equipment 300 and the user equipment 32, when the operation mode is set to the extender mode. The processor 330 may set the operation mode to one of the plurality of sub modes (e.g., a repeater mode, a wireless bridge mode, and an AP mode) secondarily based on the first connection state and the second connection state, when the extender mode is selected. The processor 330 may disable NAT and DHCP and may change the local domain provided to the user equipment 32 so as to correspond to the extender mode, when the operation mode is set to the extender mode. The web page corresponding to the local domain may include the web UI for the extender mode. The processor 330 may determine whether the first connection state is a wireless connection or a wired connection, by sensing the state of a port (e.g., a WAN port) connected to the external device 31. The processor 330 may determine whether the second connection state is a wireless connection or a wired connection, by sensing the connection state of a port (e.g., a LAN port) connected to the user equipment 32.

In particular, as described below, the processor 330 may configure the network connection so as to operate in a repeater mode, a wireless bridge mode, or an AP mode based on the first connection state and the second connection state. For example, the processor 330 may configure the network connection such that wireless communication equipment 300 operates in the repeater mode, when the wireless communication equipment is connected to an external router and the user equipment 32 wirelessly. For another example, the processor 330 may configure the network connection such that the wireless communication equipment 300 operates in the wireless bridge mode, when the wireless communication equipment is connected to the external router wirelessly and is connected to the user equipment 32 wiredly. For still another example, the processor 330 may configure the network connection such that the wireless communication equipment 300 operates in the AP mode, when the wireless communication equipment is connected to the external router wiredly. Table 1 shows a method of configuring a network connection using the switch 320.

**[Table 1]**

| | **Router mode** | **Repeater mode** | **Wireless bridge mode** | **AP mode** |
|---|---|---|---|---|
| H/W switch | Being located at a router | Being located at an extender | | |
| Connect ion state of WAN port | Wire | Wireless | Wireless | Wire |
| Concept | Operating in a router mode | Upon rebooting, checking the connection state of the WAN port, and then automatically setting the operation mode to the suitable mode. | | |
| User task | Moving HW switch to router mode 2. Connecting the network cable provided by ISP to the WAN port | Moving HW switch to extender mode Simultaneously pressing WPS buttons of an extender and an upper router | Moving HW switch to extender mode Simultaneousl y pressing WPS buttons of an extender and an upper router | Moving HW switch to extender mode |
| | | 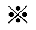 Settings using a web UI are possible | 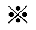 Settings using a web UI are possible | 2.Connecting an extender to an upper router by using an Ethernet cable |

According to an embodiment, the processor 330 may transmit the result of selecting at least part of the repeater mode, the wireless bridge mode, or the AP mode to the user equipment 32 and may receive a user input for verifying the selection result from the user equipment 32, when the operation mode is set to the extender mode. For example, after determining a sub mode based on the first connection state and the second connection state, the processor 330 may transmit the determination result of the sub mode to the user equipment 32. The user equipment 32 may output the determination result through a web UI. The user equipment 32 may receive a user input for verifying the determination result through the web UI. The processor 330 may configure the network connection in the sub mode determined in response to the user input. Table 2 shows a method of configuring a network connection using the web UI.

**[Table 2]**

| | **Router mode** | **Repeater mode** | **Wireless bridge mode** | **AP mode** |
|---|---|---|---|---|
| Web UI | In web UI, selecting a router mode | In web UI, selecting an extender mode | | |
| Connec tion state of WAN port | Wire | Wireless | Wireless | Wire |
| Concept | Operating in a router mode | Upon rebooting, check the connection state of the WAN port, and then automatically set the operation mode to the suitable mode. | | |
| User Task | Setting an operation mode to a router mode | Setting an operation mode to an extender mode | Setting an operation mode to an extender mode | Setting an operation mode to an extender mode |
| | 2. After rebooting, connecting the network cable provided by ISP to the WAN port | After rebooting, simultaneously pressing WPS buttons of an extender and an upper router | After rebooting, simultaneously pressing WPS buttons of an extender and an upper router | 2. After rebooting, connecting an extender to an upper router by using an Ethernet cable |
| | | 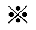 Settings through a web UI are possible | 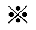 Settings through a web UI are possible | |

According to an embodiment, the processor 330 may configure the network connection to an external router, which is selected by a user, from among a plurality of external routers when the operation mode is set to the extender mode. The user equipment 32 may output the list of the plurality of external routers capable of being connected to the wireless communication equipment 300. The user may select one external router from the list. The processor 330 may configure the network connection to the selected external router. The processor 330 may change the initial service set identifier (SSID) and release the security for quick recognition of the user and easy setup at the time of mode change.

As described above, a user who lacks knowledge of network equipment may easily utilize a piece of wireless communication equipment for various purposes, by automatically setting the suitable operation mode among the router mode, the repeater mode, the wireless bridge mode, and the AP mode primarily based on the user's selection or secondarily based on the connection state of the wireless communication equipment 300.

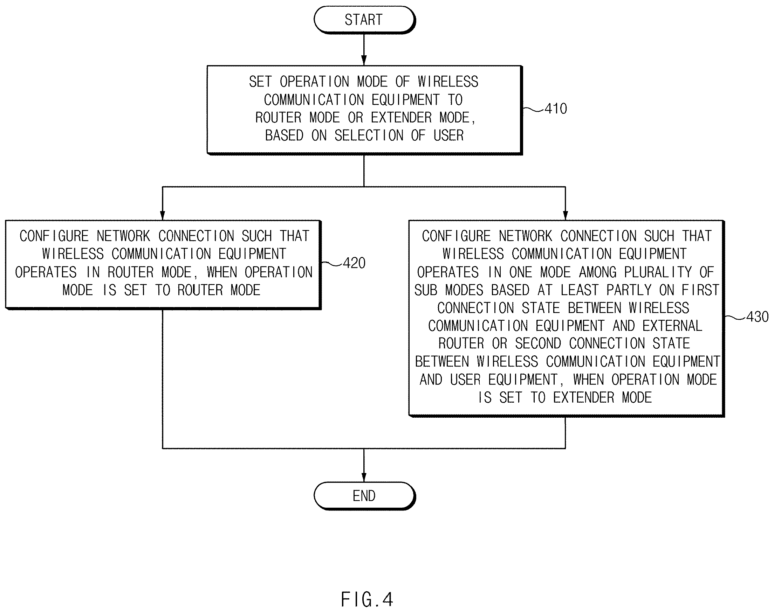

FIG. 4 is a flowchart for describing an operation mode setting method of wireless communication equipment, according to an embodiment.

Hereinafter, it is assumed that the wireless communication equipment 300 of FIG. 3 performs the process of FIG. 4. In addition, as described in FIG. 4, it is understood that the operation described as being executed by the wireless communication equipment 300 is controlled by the processor 330 of the wireless communication equipment 300.

Referring to FIG. 4, in operation 410, wireless communication equipment may set an operation mode of the wireless communication equipment to a router mode or an extender mode, based on the selection of a user of the wireless communication equipment. For example, the wireless communication equipment may first set the operation mode to the router mode or the extender mode, based on a user input to a switch or a web UI.

In operation 420, the wireless communication equipment may configure a network connection such that the wireless communication equipment operates in the router mode, when the operation mode is set to the router mode. For example, the wireless communication equipment may enable NAT and DHCP and may change the local domain provided to user equipment so as to correspond to the router mode, when the user selects the router mode.

In operation 430, the wireless communication equipment may configure the network connection such that the wireless communication equipment operates in one mode among a plurality of sub modes based at least partly on a first connection state between the wireless communication equipment and an external router or a second connection state between the wireless communication equipment and user equipment, when the operation mode is set to the extender mode. For example, the wireless communication equipment may secondarily determine whether each of the first connection state and the second connection state is a wireless connection or a wired connection and may configure the network connection so as to operate in a mode, which is suitable for the connection state, from among the repeater mode, the bridge mode, and the AP mode, when a user selects the extender mode.

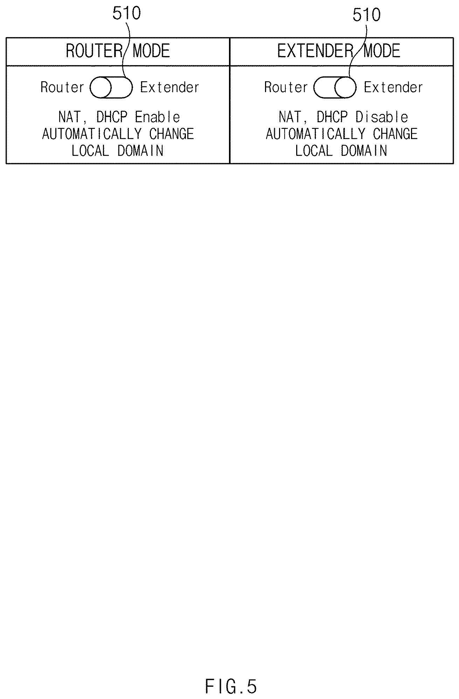

FIG. 5 illustrates an operation of a switch included in wireless communication equipment, according to an embodiment.

Referring to FIG. 5, wireless communication equipment according to an embodiment may include a switch 510 for selecting a router mode or an extender mode. The wireless communication equipment may change a default operation mode based on an input to the switch 510. The wireless communication equipment may enable NAT and DHCP and may change a local domain so as to correspond to the router mode, when the router mode is selected. The wireless communication equipment may disable NAT and DHCP and may change the local domain so as to correspond to the extender mode, when the extender mode is selected. The initial web UI may be changed automatically such that the user can easily recognizes the change of a mode after the default operation mode is changed, by changing the local domain.

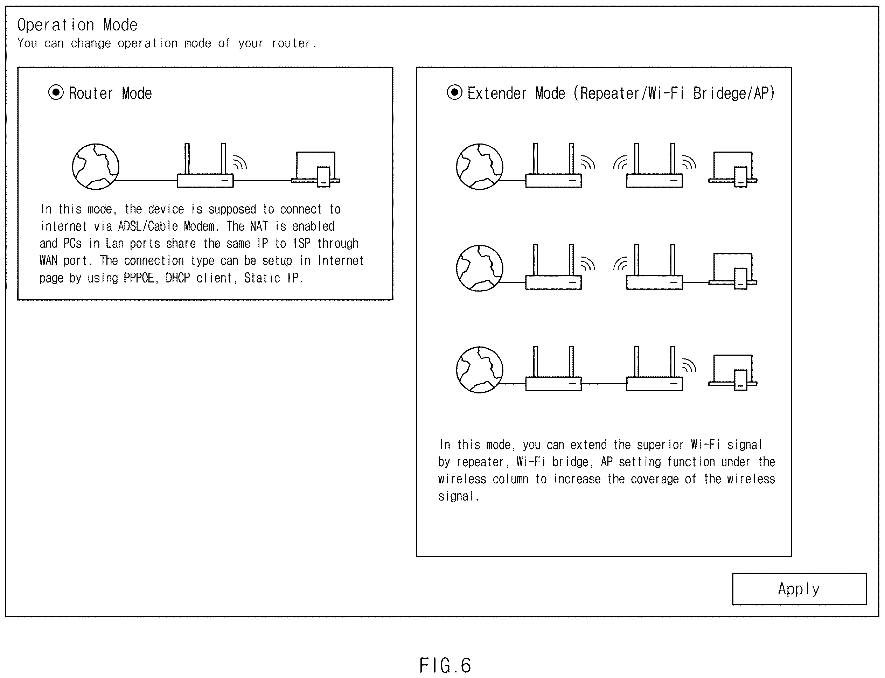

FIG. 6 illustrates an exemplary user interface provided to set an operation mode of wireless communication equipment, according to an embodiment.

Referring to FIG. 6, user equipment connected to wireless communication equipment may provide a web UI for selecting a router mode or an extender mode. The wireless communication equipment may change a default operation mode based on an input to the web UI. The wireless communication equipment may enable NAT and DHCP, when the router mode is selected on the web UI. The wireless communication equipment may disable NAT and DHCP, when the extender mode is selected.

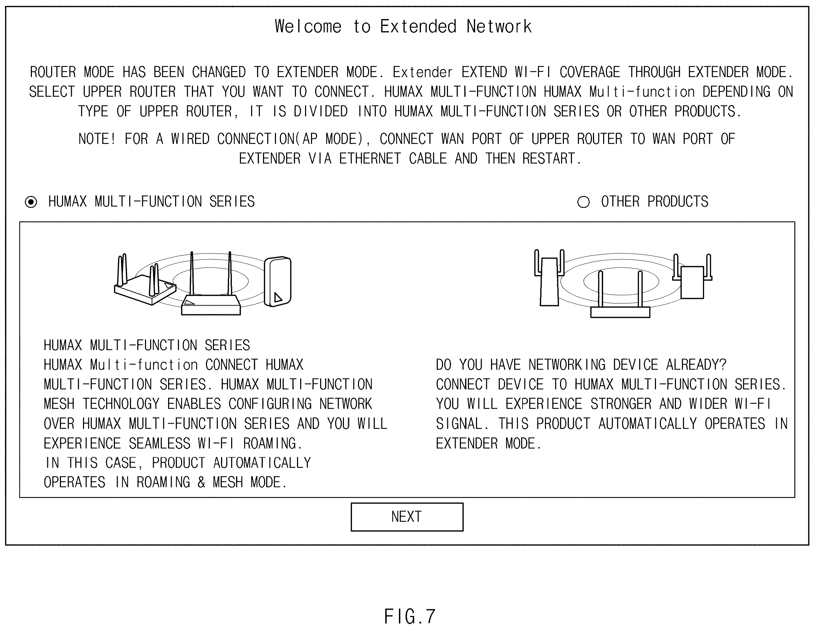

FIG. 7 illustrates an exemplary user interface provided to set an operation mode of wireless communication equipment, according to an embodiment.

Referring to FIG. 7, user equipment connected to wireless communication equipment may provide a web UI for selecting the manufacturer of the wireless communication equipment, when the operation mode of the wireless communication equipment is changed from a router mode to an extender mode. The wireless communication equipment may automatically configure a mesh network by using a mesh ID and a password and may provide a roaming service, when the manufacturer of the wireless communication equipment is the same as that of an external router. The web UI provided when the product of our own company is selected may be different from a web UI provided when the product of any other company is selected.

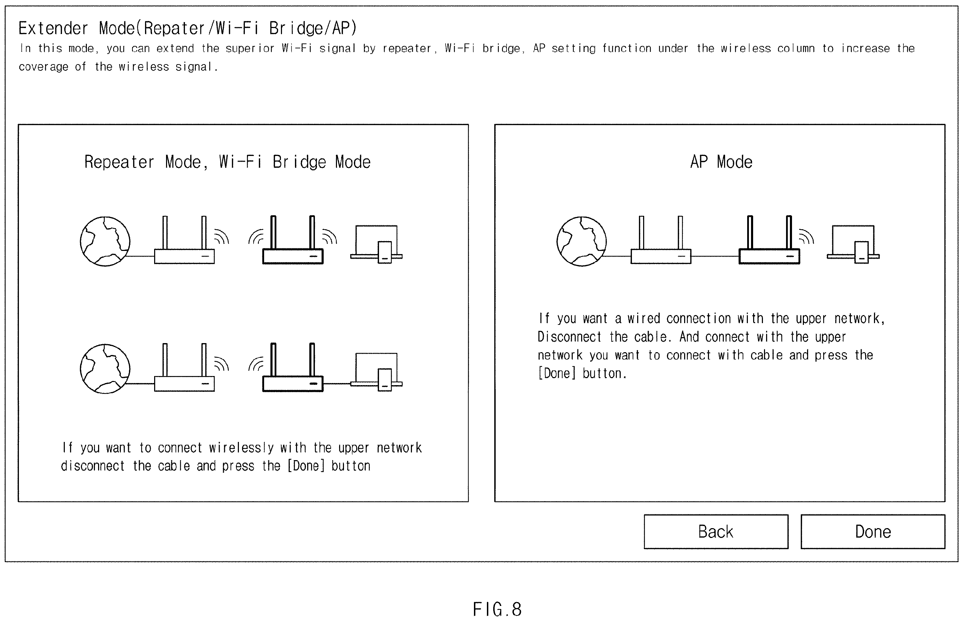

FIG. 8 illustrates an exemplary user interface provided to set an operation mode of wireless communication equipment, according to an embodiment.

Referring to FIG. 8, user equipment connected to wireless communication equipment may provide a web UI for providing a guide on a repeater and Wi-Fi bridge mode or an AP mode. The wireless communication equipment may determine a sub operation mode based at least partly on a first connection state between the wireless communication equipment and an external router or a second connection state between the wireless communication equipment and user equipment. The web UI may include a cover indicating the determined mode. For example, the web UI may change the color of the web UI area associated with the repeater and Wi-Fi mode, when it is determined that the operation mode is the repeater and Wi-Fi bridge mode; the web UI may change the color of the web UI area associated with the AP mode, when it is determined that the operation mode is the AP mode. The web UI may include a [Done] button for receiving the verification of a user. In the repeater and Wi-Fi bridge mode, the wireless communication equipment may be connected to an external router wirelessly. The wireless communication equipment may operate as a repeater, when the wireless communication equipment is connected to the user equipment wirelessly; the wireless communication equipment may operate as a Wi-Fi bridge, when the wireless communication equipment is connected to the user equipment wiredly. In the AP mode, the wireless communication equipment may be connected to the external router via a cable. The wireless communication equipment may operate as an AP and may be connected to the user equipment wiredly or wirelessly.

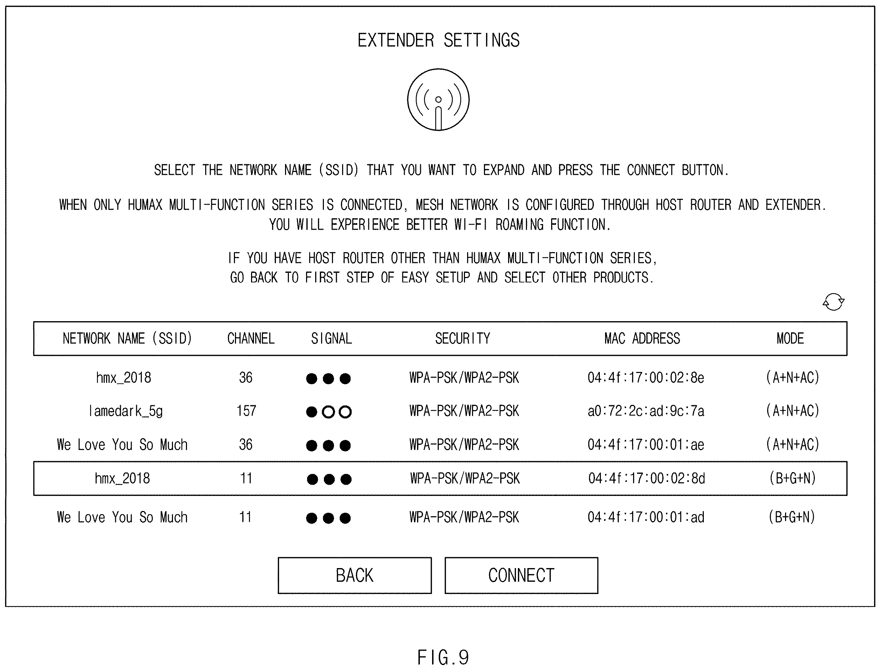

FIG. 9 illustrates an exemplary user interface provided to set an operation mode of wireless communication equipment, according to an embodiment.

Referring to FIG. 9, user equipment connected to wireless communication equipment may display a list of external routers capable of being connected to the wireless communication equipment, when the operation mode of the wireless communication equipment is set to an extender mode. The wireless communication equipment may configure a network connection, when a user selects one external router from the list. The wireless communication equipment may configure a mesh network, when the manufacturer of the wireless communication equipment is the same as the manufacturer of the selected external router. The wireless communication equipment may manually configure a network based on an input received from a user, when the manufacturer of the wireless communication equipment is different from the manufacturer of the selected external router.

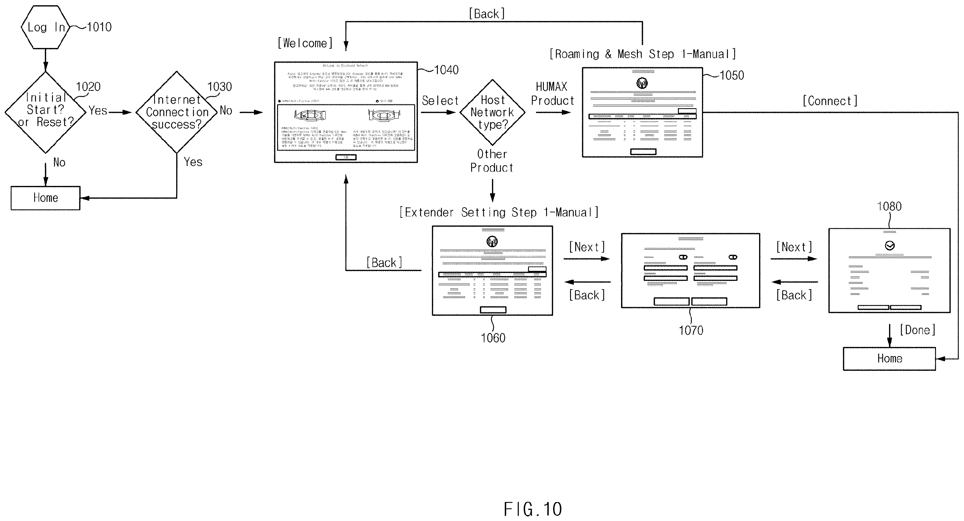

FIG. 10 is a flowchart for describing a web UI providing method for setting an operation mode of wireless communication equipment, according to an embodiment.

Referring to FIG. 10, in operation 1010, user equipment connected to wireless communication equipment may receive log-in information from a user and may log in. In operation 1020, the user equipment may determine whether the wireless communication equipment is started initially or is reset. In operation 1030, the user equipment may determine whether an Internet connection is successful, when the wireless communication equipment is started initially or is reset. In operation 1040, the user equipment may provide a screen for selecting the manufacturer of the wireless communication equipment.

In operation 1050, the user equipment may provide a list for selecting upper network equipment, when the wireless communication equipment and the upper network equipment are manufactured by the same manufacturer. The wireless communication equipment may automatically configure the network connection to the selected upper network equipment, when a piece of upper network equipment is selected from the list. The required user input may be minimized when the wireless communication equipment and the upper network equipment are manufactured by the same manufacturer.

In operation 1060, the user equipment may provide the list for selecting the upper network equipment, when the wireless communication equipment and the upper network equipment are manufactured by different manufacturers. In operation 1070, the user equipment may provide a screen for receiving information for the network connection, when a piece of upper network equipment is selected from the list and the password corresponding to the selected upper network equipment is entered. The user equipment may receive an SSID, a password, and the like through the provided screen. In operation 1080, the wireless communication equipment may configure the network connection and the user equipment may provide a screen for outputting information about a setting value, when the settings of wireless information are completed through the provided screen.

In the present disclosure, each block or each step may represent a part of a module, segment, or code that includes one or more executable instructions for executing a specified logical function. In addition, it should also be noted that in some alternative embodiments, the functions described in blocks or steps occur out of order. For example, two consecutive blocks or steps may, in fact, be performed substantially and concurrently, or the blocks or steps may sometimes be performed in reverse order depending on the corresponding function.

The step of the methods or algorithms described in connection with the embodiments disclosed in the specification may be directly implemented with a hardware module, a software module, or a combination of the hardware module and the software module, which is executed by a processor. The software module may reside in a random access memory (RAM), a flash memory, a read only memory (ROM), an erasable and programmable ROM (EPROM), an electrically EPROM (EEPROM), a register, a hard disk drive (HDD), a removable disc, a compact disc-ROM (CD-ROM), or any other form of storage medium known in the art. The exemplary storage medium may be coupled to the processor. The processor may read out information from the storage medium and may write information in the storage medium. Alternatively, the storage medium may be integrated with the processor. The processor and storage medium may reside in an application specific integrated circuit (ASIC). The ASIC may reside in a user terminal. Alternatively, the processor and storage medium may reside as a separate component in the user terminal.

The embodiments of the present disclosure have been described in detail with reference to the accompanying drawings.

The scope of protection of the present disclosure should be construed by the attached claims.

According to various embodiments of the present disclosure, a user who lacks knowledge of network equipment may easily utilize a piece of wireless communication equipment for various purposes, by setting the operation mode of the wireless communication equipment automatically through a switch or a web UI based on a user input and the connection state of the wireless communication equipment.

Besides, a variety of effects directly or indirectly understood through this disclosure may be provided.

## Claims

1. Wireless communication equipment (110, 300) comprising:
a communication interface (310); and
a processor (330) electrically connected to the communication interface (310),
wherein the processor (330) is configured to:
set an operation mode of the wireless communication equipment (110, 300) to a router mode or an extender mode, based on a selection of a user of the wireless communication equipment (110, 300);
when the operation mode is set to the router mode, configure a network connection such that the wireless communication equipment (110, 300) operates in the router mode;
**characterized in that**,
when the operation mode is changed to the extender mode, provide a web user interface for selecting a manufacturer of the wireless communication equipment (110, 300);
when the manufacturer of the wireless communication equipment (110, 300) is the same as that of an external device (130), automatically configure a mesh network by using a mesh ID and a password;
when the manufacturer of the wireless communication equipment (110, 300) is different from that of the external device (130), configure the network connection such that the wireless communication equipment (110, 300) operates in one of a plurality of sub modes included in the extender mode based at least partly on a first connection state between the wireless communication equipment (110, 300) and the external device (130) or a second connection state between the wireless communication equipment (110, 300) and a user equipment (120, 32),
wherein the external device is a device that provides a connection to a network.

2. The wireless communication equipment (110, 300) of claim 1, further comprising:
a switch (320) configured to select the operation mode, wherein the processor (330) is configured to:
set the operation mode to the router mode or the extender mode based on a state of the switch (320).

3. The wireless communication equipment (110, 300) of claim 1, wherein the processor (330) is configured to:
receive an input of the user for a selection of the operation mode from the user equipment (120, 32) through a user interface provided by the user equipment (120, 32); and
set the operation mode to the router mode or the extender mode based on the input of the user.

4. The wireless communication equipment (110, 300) of claim 1, wherein the processor (330) is configured to:
when the operation mode is set to the router mode, enable network address translation (NAT) and dynamic host configuration protocol (DHCP); and
change a local domain provided to the user equipment (120, 32) so as to correspond to the router mode.

5. The wireless communication equipment (110, 300) of claim 1, wherein the processor (330) is configured to:
when the operation mode is set to the extender mode, disable NAT and DHCP; and
change a local domain provided to the user equipment (120, 32) so as to correspond to the extender mode.

6. The wireless communication equipment (110, 300) of claim 1, wherein the plurality of sub modes includes a repeater mode, a wireless bridge mode, and an access point (AP) mode.

7. The wireless communication equipment (110, 300) of claim 6, wherein the processor (330) is configured to:
when the wireless communication equipment is connected to the external device (130) and the user equipment (120, 32) wirelessly, configure the network connection such that the wireless communication equipment operates in the repeater mode.

8. The wireless communication equipment (110, 300) of claim 6, wherein the processor (330) is configured to:
when the wireless communication equipment is connected to the external device (130) wirelessly and is connected to the user equipment (120, 32) wiredly, configure the network connection such that the wireless communication equipment operates in the wireless bridge mode.

9. The wireless communication equipment (110, 300) of claim 6, wherein the processor (330) is configured to:
when the wireless communication equipment is connected to the external device (130) wiredly,
configure the network connection such that the wireless communication equipment operates in the AP mode.

10. The wireless communication equipment (110, 300) of claim 6, wherein the processor (330) is configured to:
when the operation mode is set to the extender mode, transmit a selection result for at least part of the repeater mode, the wireless bridge mode or the AP mode to the user equipment (120, 32); and
receive a user input for verifying the selection result from the user equipment (120, 32).

11. The wireless communication equipment (110, 300) of claim 1, wherein the processor (330) is configured to:
when the operation mode is set to the extender mode, configure the network connection to an external device (130), which is selected by the user, from among a plurality of external devices (130).

12. An operation mode setting method of wireless communication equipment (110, 300) comprising:
setting an operation mode of the wireless communication equipment (110, 300) to a router mode or an extender mode, based on a selection of a user of the wireless communication equipment (110, 300);
when the operation mode is set to the router mode, configuring a network connection such that the wireless communication equipment (110, 300) operates in the router mode; **characterized in that**,
when the operation mode is changed to the extender mode, providing a web user interface for selecting a manufacturer of the wireless communication equipment (110, 300);
when the manufacturer of the wireless communication equipment (110, 300) is the same as that of an external device (130), automatically configuring a mesh network by using a mesh ID and a password;
when the manufacturer of the wireless communication equipment (110, 300) is different from that of the external device (130), configuring the network connection such that the wireless communication equipment (110, 300) operates in one of a plurality of sub modes included in the extender mode based at least partly on a first connection state between the wireless communication equipment (110, 300) and the external device (130) or a second connection state between the wireless communication equipment (110, 300) and user equipment (120, 32),
wherein the external device is a device that provides a connection to a network.

## Patentansprüche

1. Drahtloskommunikationsausrüstung (110, 300) umfassend:
eine Kommunikationsschnittstelle (310), und
einen Prozessor (330), der mit der Kommunikationsschnittstelle (310) elektrisch verbunden ist,
wobei der Prozessor (330) dazu konfiguriert ist:
einen Betriebsmodus der Drahtloskommunikationsausrüstung (110, 300) auf einen Router-Modus oder einen Extender-Modus einzustellen, basierend auf einer Auswahl eines Benutzers der Drahtloskommunikationsausrüstung (110, 300);
wenn der Betriebsmodus auf den Router-Modus eingestellt ist, eine Netzwerkverbindung derart zu konfigurieren, dass die Drahtloskommunikationsausrüstung (110, 300) im Router-Modus arbeitet,
**dadurch gekennzeichnet, dass** der Prozessor (330) dazu konfiguriert ist:
wenn der Betriebsmodus auf den Extender-Modus gewechselt wird, eine Web-Benutzer-Schnittstelle zum Auswählen eines Herstellers der Drahtloskommunikationsausrüstung (110, 300) bereitzustellen;
wenn der Hersteller der Drahtloskommunikationsausrüstung (110, 300) der gleiche ist wie der einer externen Vorrichtung (130), ein Mesh-Netzwerk durch Verwenden einer Mesh-ID und eines Passworts automatisch zu konfigurieren;
wenn der Hersteller der Drahtloskommunikationsausrüstung (110, 300) von dem der externen Vorrichtung (130) verschieden ist, die Netzwerkverbindung derart zu konfigurieren, dass die Drahtloskommunikationsausrüstung (110, 300) in einem von einer Vielzahl von Untermodi arbeitet, die in dem Extender-Modus umfasst sind, basierend wenigstens teilweise auf einem ersten Verbindungszustand zwischen der Drahtloskommunikationsausrüstung (110, 300) und der externen Vorrichtung (130) oder auf einem zweiten Verbindungszustand zwischen der Drahtloskommunikationsausrüstung (110, 300) und einer Benutzerausrüstung (120, 32),
wobei die externe Vorrichtung eine Vorrichtung ist, die eine Verbindung zu einem Netzwerk bereitstellt.

2. Drahtloskommunikationsausrüstung (110, 300) nach Anspruch 1, ferner umfassend:
einen Schalter (320), der dazu konfiguriert ist, den Betriebsmodus auszuwählen, wobei der Prozessor (330) dazu konfiguriert ist:
den Betriebsmodus auf den Router-Modus oder den Extender-Modus basierend auf einem Zustand des Schalters (320) einzustellen.

3. Drahtloskommunikationsausrüstung (110, 300) nach Anspruch 1, wobei der Prozessor (330) dazu konfiguriert ist:
eine Eingabe des Benutzers für eine Auswahl des Betriebsmodus von der Benutzerausrüstung (120, 32) durch eine von der Benutzerausrüstung (120, 32) bereitgestellte Benutzerschnittstelle zu empfangen; und
den Betriebsmodus auf den Router-Modus oder den Extender-Modus basierend auf der Eingabe des Benutzers einzustellen.

4. Drahtloskommunikationsausrüstung (110, 300) nach Anspruch 1, wobei der Prozessor (330) dazu konfiguriert ist:
wenn der Betriebsmodus auf den Router-Modus eingestellt ist, Netzwerkadressübersetzung (network address translation; NAT) und dynamisches Hostkonfigurationsprotokoll (dynamic host configuration protocol; DHCP) zu aktivieren; und
eine lokale Domäne, die für die Benutzerausrüstung (120, 32) bereitgestellt wird, so zu ändern, dass sie dem Router-Modus entspricht.

5. Drahtloskommunikationsausrüstung (110, 300) nach Anspruch 1, wobei der Prozessor (330) dazu konfiguriert ist:
wenn der Betriebsmodus auf den Extender-Modus eingestellt ist, NAT und DHCP zu deaktivieren; und
eine für die Benutzerausrüstung (120, 32) bereitgestellte lokale Domäne so zu ändern, dass sie dem Extender-Modus entspricht.

6. Drahtloskommunikationsausrüstung (110, 300) nach Anspruch 1, wobei die Vielzahl von Untermodi einen Repeater-Modus, einen drahtlosen Bridge-Modus und einen Zugangspunkt (access point; AP)-Modus umfasst.

7. Drahtloskommunikationsausrüstung (110, 300) nach Anspruch 6, wobei der Prozessor (330) dazu konfiguriert ist:
wenn die Drahtloskommunikationsausrüstung mit der externen Vorrichtung (130) und der Benutzerausrüstung (120, 32) drahtlos verbunden ist, die Netzwerkverbindung derart zu konfigurieren, dass die Drahtloskommunikationsausrüstung im Repeater-Modus arbeitet.

8. Drahtloskommunikationsausrüstung (110, 300) nach Anspruch 6, wobei der Prozessor (330) dazu konfiguriert ist:
wenn die Drahtloskommunikationsausrüstung mit der externen Vorrichtung (130) drahtlos und mit der Benutzerausrüstung (120, 32) drahtgebunden verbunden ist, die Netzwerkverbindung derart zu konfigurieren, dass die Drahtloskommunikationsausrüstung im drahtlosen Bridge-Modus arbeitet.

9. Drahtloskommunikationsausrüstung (110, 300) nach Anspruch 6, wobei der Prozessor (330) dazu konfiguriert ist:
wenn die Drahtloskommunikationsausrüstung mit der externen Vorrichtung (130) drahtgebunden verbunden ist, die Netzwerkverbindung derart zu konfigurieren, dass die Drahtloskommunikationsausrüstung im AP-Modus arbeitet.

10. Drahtloskommunikationsausrüstung (110, 300) nach Anspruch 6, wobei der Prozessor (330) dazu konfiguriert ist:
wenn der Betriebsmodus auf den Extender-Modus eingestellt ist, ein Auswahlergebnis für wenigstens einen Teil des Repeater-Modus, des drahtlosen Bridge-Modus oder des AP-Modus an die Benutzerausrüstung (120, 32) zu übertragen; und
eine Benutzereingabe zum Verifizieren des Auswahlergebnisses von der Benutzerausrüstung (120, 32) zu empfangen.

11. Drahtloskommunikationsausrüstung (110, 300) nach Anspruch 1, wobei der Prozessor (330) dazu konfiguriert ist:
wenn der Betriebsmodus auf den Extender-Modus eingestellt ist, die Netzwerkverbindung zu einer externen Vorrichtung (130) zu konfigurieren, die von dem Benutzer aus einer Vielzahl von externen Vorrichtungen (130) ausgewählt ist.

12. Verfahren zum Einstellen des Betriebsmodus einer Drahtloskommunikationsausrüstung (110, 300), umfassend:
Einstellen eines Betriebsmodus der Drahtloskommunikationsausrüstung (110, 300) auf einen Router-Modus oder einen Extender-Modus, basierend auf einer Auswahl eines Benutzers der Drahtloskommunikationsausrüstung (110, 300);
wenn der Betriebsmodus auf den Router-Modus eingestellt ist, Konfigurieren einer Netzwerkverbindung derart, dass die Drahtloskommunikationsausrüstung (110, 300) im Router-Modus arbeitet, **dadurch gekennzeichnet, dass**
wenn der Betriebsmodus auf den Extender-Modus gewechselt wird, eine Web-Benutzer-Schnittstelle zum Auswählen eines Herstellers der Drahtloskommunikationsausrüstung (110, 300) bereitgestellt wird;
wenn der Hersteller der Drahtloskommunikationsausrüstung (110, 300) der gleiche ist wie der einer externen Vorrichtung (130), ein Mesh-Netzwerk durch Verwenden einer Mesh-ID und eines Passworts automatisch konfiguriert wird;
wenn der Hersteller der Drahtloskommunikationsausrüstung (110, 300) von dem der externen Vorrichtung (130) verschieden ist, die Netzwerkverbindung derart konfiguriert wird, dass die Drahtloskommunikationsausrüstung (110, 300) in einem von einer Vielzahl von Untermodi arbeitet, die in dem Extender-Modus umfasst sind, basierend wenigstens teilweise auf einem ersten Verbindungszustand zwischen der Drahtloskommunikationsausrüstung (110, 300) und der externen Vorrichtung (130) oder auf einem zweiten Verbindungszustand zwischen der Drahtloskommunikationsausrüstung (110, 300) und einer Benutzerausrüstung (120, 32),
wobei die externe Vorrichtung eine Vorrichtung ist, die eine Verbindung zu einem Netzwerk bereitstellt.

## Revendications

1. Equipement de communication sans fil (110, 300) comprenant :
une interface de communication (310) et
un processeur (330) connecté électriquement à l'interface de communication (310),
où le processeur (330) est configuré pour :
régler un mode de fonctionnement de l'équipement de communication sans fil (110, 300) en un mode routeur ou un mode extenseur, sur la base d'une sélection par un utilisateur de l'équipement de communication sans fil (110, 300),
quand le mode de fonctionnement est réglé en mode routeur, configurer une connexion au réseau de telle manière que l'équipement de communication sans fil (110, 300) fonctionne en mode routeur,
**caractérisé en ce que**,
quand le mode de fonctionnement est changé en mode extenseur, fournir une interface utilisateur de web pour choisir un fabriquant pour l'équipement de communication sans fil (110, 300),
quand le fabricant de l'équipement de communication sans fil (110, 300) est le même que celui d'un dispositif externe (130), configurer automatiquement un réseau de mailles en utilisant une identification de maille et un mot de passe,
quand le fabricant de l'équipement de communication sans fil (110, 300) est différent de celui du dispositif externe (130), configurer la connexion réseau de telle manière que l'équipement de communication sans fil (110, 300) fonctionne dans un mode parmi une pluralité de sous modes inclus dans le mode extenseur basé au moins partiellement sur un premier état de connexion entre l'équipement de communication sans fil (110, 300) et le dispositif externe (130) ou un deuxième état de connexion entre l'équipement de communication sans fil (110, 300) et l'équipement d'un utilisateur (120, 32),
où le dispositif externe est un dispositif qui fournit une connexion à un réseau.

2. Equipement de communication sans fil (110, 300) selon la revendication 1, comprenant en outre :
un interrupteur (320) configuré pour choisir le mode de fonctionnement, où le processeur (330) est configuré pour :
régler le mode de fonctionnement en mode routeur ou en mode extenseur sur la base d'un état de l'interrupteur (320).

3. Equipement de communication sans fil (110, 300) selon la revendication 1, **caractérisé en ce que** le processeur (330) est configuré pour :
recevoir une entrée de l'utilisateur pour la sélection du mode de fonctionnement à partir de l'équipement de l'utilisateur (120, 32) à travers une interface de l'utilisateur fournie par l'équipement de l'utilisateur (120, 32) et
régler le mode de fonctionnement en mode routeur ou en mode extenseur sur la base de l'entrée de l'utilisateur.

4. Equipement de communication sans fil (110, 300) selon la revendication 1, **caractérisé en ce que** le processeur (330) est configuré pour :
quand le mode de fonctionnement est réglé en mode routeur, permettre la conversion d'adresse de réseau (NAT) et le protocole DHCP et
modifier un domaine local fourni à l'équipement de l'utilisateur (120, 32) de manière à correspondre au mode routeur.

5. Equipement de communication sans fil (110, 300) selon la revendication 1, **caractérisé en ce que** le processeur (330) est configuré pour :
quand le mode de fonctionnement est réglé en mode extenseur désactiver le NAT et le DHCP et
modifier un domaine local fourni à l'équipement de l'utilisateur (120, 32) de manière à correspondre au mode extenseur.

6. Equipement de communication sans fil (110, 300) selon la revendication 1, **caractérisé en ce que** la pluralité des sous modes inclut un mode répétiteur, un mode pont sans fil et un mode point d'accès (AP).

7. Equipement de communication sans fil (110, 300) selon la revendication 6, **caractérisé en ce que** le processeur (330) est configuré pour :
quand l'équipement de communication sans fil est connecté au dispositif externe (130) et à l'équipement de l'utilisateur (120, 32) de manière non filaire, configurer la connexion au réseau de manière à ce que l'équipement de connexion sans fil fonctionne en mode répétiteur.

8. Equipement de communication sans fil (110, 300) selon la revendication 6, **caractérisé en ce que** le processeur (330) est configuré pour :
quand l'équipement de communication sans fil est connecté au dispositif externe (130) de manière non filaire et est connecté à l'équipement de l'utilisateur (120, 32) de manière filaire, configurer la connexion au réseau de telle manière que l'équipement de communication sans fil fonctionne en mode pont sans fil.

9. Equipement de communication sans fil (110, 300) selon la revendication 6, **caractérisé en ce que** le processeur (330) est configuré pour :
quand l'équipement de communication sans fil est connecté au dispositif externe (130) de manière filaire,
configurer la connexion au réseau de telle manière que l'équipement de communication sans fil fonctionne en mode AP.

10. Equipement de communication sans fil (110, 300) selon la revendication 6, **caractérisé en ce que** le processeur (330) est configuré pour :
quand le mode de fonctionnement est réglé en mode extenseur, transmettre un résultat de sélection pour au moins une partie du mode répétiteur, du mode de pont sans fil ou du mode AP à l'équipement de l'utilisateur (120, 32) et
recevoir une entrée de l'utilisateur pour vérifier le résultat de la sélection auprès de l'équipement de l'utilisateur (120, 32).

11. Equipement de communication sans fil (110, 300) selon la revendication 1, **caractérisé en ce que** le processeur (330) est configuré pour :
quand le mode de fonctionnement est réglé en mode extenseur, configurer la connexion réseau à un dispositif externe (130) qui est choisi par l'utilisateur, depuis un dispositif une pluralité de dispositifs externes (130).

12. Procédé de réglage du mode de fonctionnement de l'équipement de communication sans fil (110, 300) comprenant :
le réglage d'un mode de fonctionnement de l'équipement de communication sans fil (110, 300) en un mode routeur ou un mode extenseur, sur la base d'une sélection d'un utilisateur de l'équipement de communication sans fil (110, 300),
quand le mode de fonctionnement est réglé en mode routeur, configurer une connexion réseau telle que l'équipement de communication sans fil (110, 300) fonctionne en mode routeur, **caractérisé en ce que**
quand le mode de fonctionnement est changé en mode extenseur, fournir une interface utilisateur du web pour sélectionner un fabricant de l'équipement de communication sans fil (110, 300),
quand le fabricant de l'équipement de communication sans fil (110, 300) est le même que celui du dispositif externe (130), la configuration automatique d'un réseau de mailles en utilisant une identité de mailles et un mot de passe,
quand le fabricant de l'équipement de communication sans fil (110, 300) est différent de celui du dispositif externe (130), configurer la connexion réseau de telle manière que l'équipement de communication sans fil (110, 300) fonctionne en un mode parmi une pluralité de sous modes inclus dans le mode extenseur basé au moins partiellement sur un premier état de connexion entre l'équipement de communication sans fil (110, 300) et le dispositif externe (130) ou un deuxième état de connexion entre l'équipement de communication sans fil (110, 300) et un équipement de l'utilisateur (120, 32),
où le dispositif externe est un dispositif qui fournit une connexion à un réseau.
